# EUROPEAN PATENT APPLICATION

(11) **EP 1 819 188 A1**
(43) Date of publication of application: **15.08.2007**
(21) Application number: 07002846.9
(22) Date of filing: 09.02.2007
(51) Int. Cl.: H04Q 7/38

(54) **Method and system for setting tracking area in a wireless communication system**

(30) Priority: 09.02.2006 KR 20060012773
(71) Applicant: Samsung Electronics Co., Ltd., Suwon-si, Gyeonggi-Do (KR)
(72) Inventor: Kwak, No-Jun, c/o Samsung Electronics Co. Ltd., Suwon-si, Gyeonggi-do (KR); Choi, Sung-Ho, c/o Samsung Electronics Co. Ltd., Suwon-si, Gyeonggi-do (KR)
(74) Representative: Grünecker, Kinkeldey, Stockmair & Schwanhäusser Anwaltssozietät

(57) **Abstract**

Provided are a method and a system for setting a tracking area for an Mobile Station (MS) in a wireless communication system, in which the MS estimates its velocity (403), compares the estimated velocity with at least one velocity threshold (407,409), and updates the level of a current tracking area according to the comparison (411,413,415).

## Description

### BACKGROUND OF THE INVENTION

### 1. Field of the Invention

The present invention relates generally to a method and system for setting the operation mode of a Mobile Station (MS) (or User Equipment (UE)) in a wireless communication system and in particular, to a method and system for setting a tracking area for an MS.

### 2. Description of the Related Art

In a wireless communication system, an MS is placed in idle mode after communications with a Base Station (BS) to save battery power. In the presence of data to be sent to the MS in the idle mode, a network allocates a tracking area including at least one cell, for paging. Paging is a process of locating the MS. The tracking area is also called a routing area.

The BS broadcasts information about a tracking area including a cell managed by the BS. In the idle mode, the MS identifies the tracking area in the cell based on the broadcast tracking area information and compares the identified tracking area with a tracking area allocated to the MS. If the two tracking areas are different, the MS updates its tracking area by sending a Tracking Area (TA) update message to the network.

Meanwhile, when the network has data to be sent to the MS, the network locates the MS in all cells within the tracking area allocated to the MS and page the MS on a paging channel to communicate with the MS. Conventionally, one cell is mapped to one tracking area. Therefore, a fast MS frequently sends the TA update message to the network, thereby dissipating its battery power, whereas an almost stationary MS causes a waste of downlink radio resources due to paging overhead.

### SUMMARY OF THE INVENTION

An aspect of exemplary embodiments of the present invention is to address at least the problems and/or disadvantages and to provide at least the advantages described below. Accordingly, an aspect of exemplary embodiments of the present invention is to provide a method and system for setting a tracking area for an MS in a wireless communication system.

Another aspect of exemplary embodiments of the present invention is to provide a method and system for setting a variable tracking area, taking into account the velocity of an MS in a wireless communication system.

A further aspect of the present invention is to provide a method and system for setting a tracking area for an MS, taking into account the change of a tracking area in a wireless communication system.

In accordance with an aspect of exemplary embodiments of the present invention, there is provided a method of an MS for setting a tracking area in a wireless communication system, in which the MS estimates its velocity, compares the estimated velocity with at least one velocity threshold, and updates the level of a current tracking area according to the comparison.

In accordance with another aspect of exemplary embodiments of the present invention, there is provided a method of a BS for setting a tracking area in a wireless communication system, in which the BS receives a tracking area update message including an updated level from an MS, and sends a tracking area update confirm message to the MS. The level of a tracking area of the MS is updated to the updated level according to a change in the velocity of the MS.

In accordance with a further aspect of exemplary embodiments of the present invention, there is provided a wireless communication system, in which an MS estimates the velocity of the MS, compares the estimated velocity with at least one velocity threshold, and updates the level of a current tracking area according to the comparison, and a BS receives a tracking area update message including the updated level from the MS.

### BRIEF DESCRIPTION OF THE DRAWINGS

The above and other aspects, features and advantages of certain exemplary embodiments of the present invention will become more apparent from the following detailed description taken in conjunction with the accompanying drawings, in which:
FIG. 1 illustrates an example of multi-level tracking areas set in a cell of each BS according to the velocities of MSs according to a first exemplary embodiment of the present invention;
FIG. 2 illustrates another example of multi-level tracking areas set in a cell of each BS according to the first exemplary embodiment of the present invention;
FIG. 3 illustrates different tracking areas set for different MSs according to a second exemplary embodiment of the present invention;
FIG. 4 is a flowchart illustrating an operation of the MS according to the first exemplary embodiment of the present invention;
FIG. 5 is a flowchart illustrating an operation of the MS for estimating its velocity during the MS operation according to the first exemplary embodiment of the present invention;
FIG. 6 is a flowchart illustrating an operation of a BS according to the first exemplary embodiment of the present invention; and
FIG. 7 is a flowchart illustrating an operation of the BS according to the second exemplary embodiment of the present invention.

### DETAILED DESCRIPTION OF EXEMPLARY EMBODIMENTS

The matters defined in the description such as a detailed construction and elements are provided to assist in a comprehensive understanding of exemplary embodiments of the invention. In the drawings, the same or similar elements, features and structures are denoted by the same reference numerals even though they are depicted in different drawings. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The term "network" used herein refers to a Base Transceiver Station (BTS), a Base Station Controller (BSC), or a Core Network (CN). A BS covers both the BTS and the BSC. For better understanding of the present invention, it is assumed that an entity that receives a Tracking Area (TA) update message is the BS.

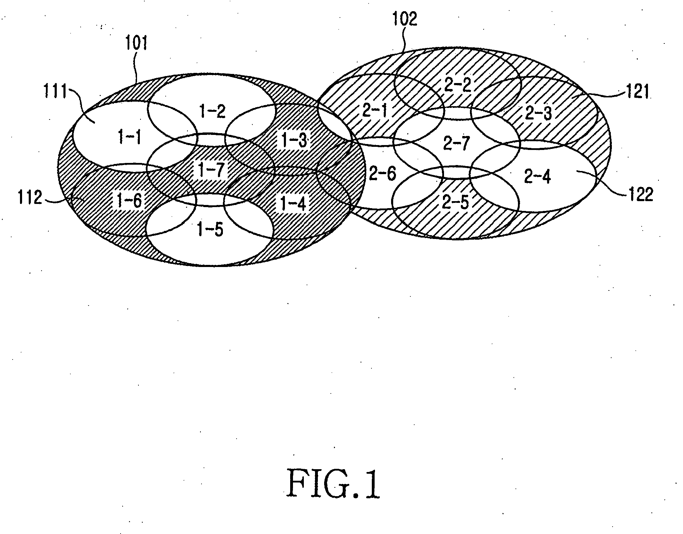

FIG. 1 illustrates a first example of multi-level tracking areas set in a cell of each BS according to an exemplary embodiment of the present invention. Referring to FIG 1, narrow tracking areas 111, 112, 121 and 122, etc are allocated to slow MSs, to thereby reduce the paging overhead of BSs, whereas wide tracking areas 101 and 102, etc are allocated to fast MSs, to thereby reduce the number of transmissions of TA update messages from the MSs to the BSs and thus conserve battery power.

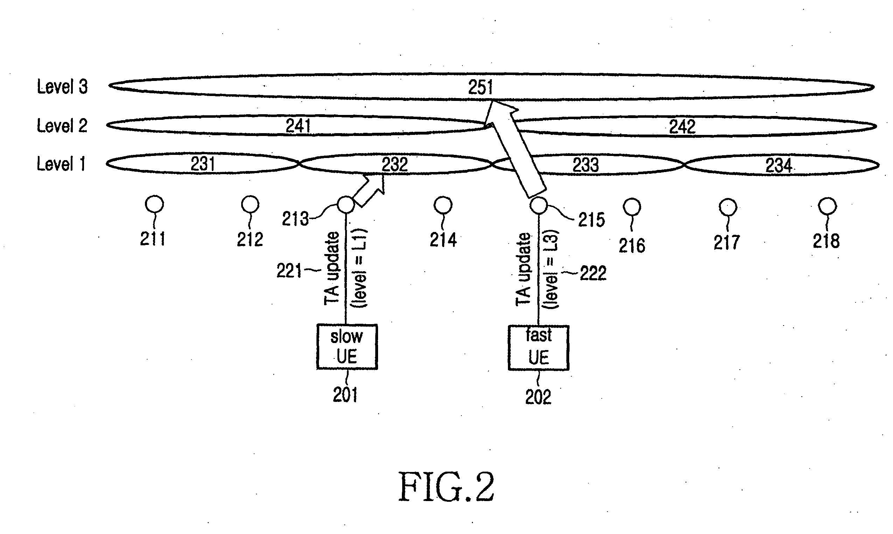

FIG. 2 illustrates another example of multi-level tracking areas set in a cell of each BS according to the exemplary embodiment of the present invention. Referring to FIG. 2, MSs send different TA update messages according to the TA levels of their tracking areas.

Referring to FIG. 2, reference numerals 201 and 202 denote MSs, and reference numerals 211 to 218 denote BSs. The BSs 211 to 218 respectively broadcast information indicating the existence of tracking areas of different levels, Level 1 (L1) to Level 3 (L3) to their cells. After measuring their velocities, the MSs 201 and 202 send TA update messages indicating the TA levels of tracking areas set according to the velocities to the BSs 213 and 215.

For example, the MS 201 moves at such a slow rate it is almost stationary. The MS 201 sends a TA update message 221 indicating L1 to the BS 213 and the BS 213 sets a narrow tracking area 232 for the MS 201. Alternatively, the MS 202 moves fast and sends a TA update message indicating L3 to the BS 215 and the BS 215 sets a wide tracking area 251 for the MS 202.

While the MSs 201 and 202 send the tracking area setting information to the BSs 213 and 215 by the TA update messages 221 and 222, another message may be used to carry the same information.

In general, a CN above a BS is responsible for managing an MS in idle mode. Therefore, a BS has no information of the tracking area of the MS. The BS receives the information of the tracking area of the MS from the CN. Upon receipt of downlink data destined for the MS, the CN sends information such as the Identifier (ID) of the MS to be paged to the BS and the BS pages the MS. Hence, other BSs within the wide tracking area 251 know the tracking area of the MS 202 from the CN.

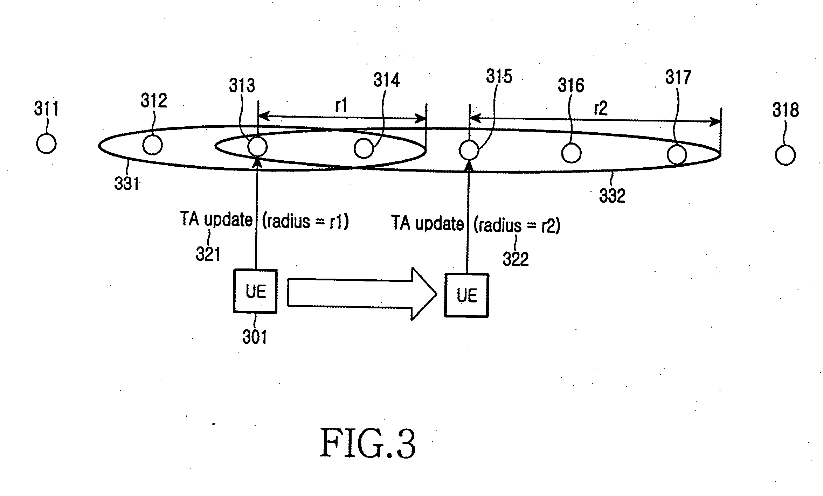

FIG. 3 illustrates different tracking areas set for different MSs according to the second exemplary embodiment of the present invention.

Referring to FIG. 3, BSs 311 to 318 broadcast their location information to an MS 301 in their respective cells. The MS 301 sends a TA update message indicating a TA radius r1 321 or r2 322 to a BS so that tracking area information is made identical between the MS 301 and the BS. This exemplary embodiment of the present invention is characterized in that each cell is not mapped to a tracking area and thus a different tracking area may exist for each MS in a cell.

If the MS 301 estimates its velocity and notifies a BS 313 of its TA radius, for example, r1 in a TA update message 321, cells (managed by BSs 312, 313 and 314) within the radius r1 from the BS 313 at the center form a tracking area for the MS 301. The MS 301 receives BS location information broadcast from each of the BSs 312, 313 and 314, calculates the distance to the center of the tracking area, i.e. the BS 313, and determines whether to update the tracking area according to the distance.

For example, if the MS 301 moves to a new cell managed by the BS 315 from the old cell managed by the BS 313, it receives location information of the BS 315 broadcast from the new cell and calculates the distance between the BSs 313 and 315. If the distance is greater than the radius of the current tracking area, r1, the MS 301 sends a TA update message 322 to the BS 315.

When sending the TA update message 321, the MS 301 estimates its velocity and sets the TA radius to r2, taking into account its velocity. Reference numeral 332 denotes a new tracking area with radius r2.

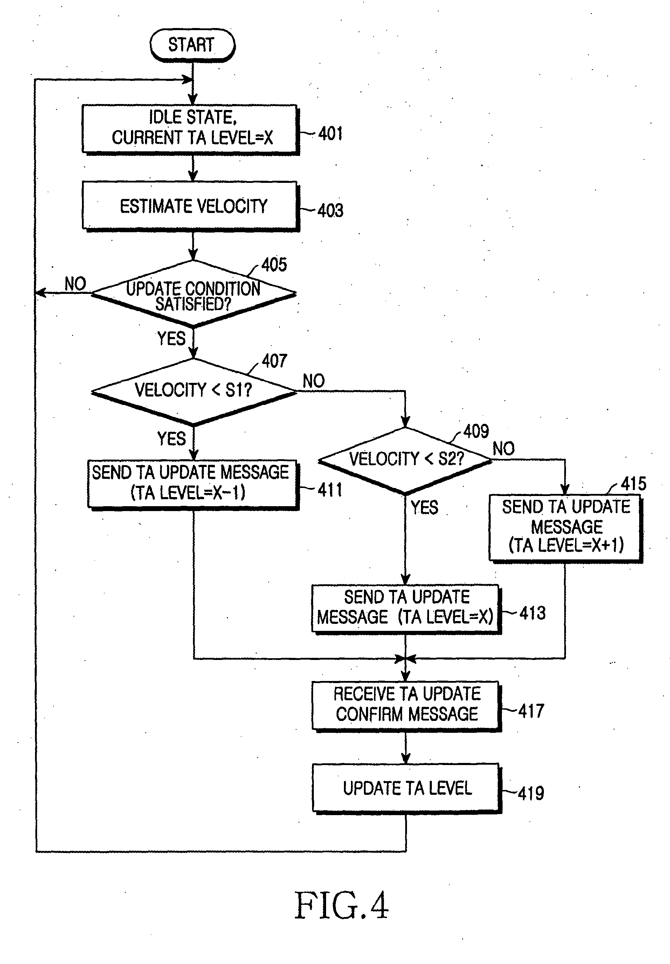

FIG. 4 is a flowchart illustrating an operation of the MS according to the first exemplary embodiment of the present invention. The MS updates its tracking area depending on whether its velocity is increased or decreased.

Referring to FIG. 4, the MS is in idle mode in step 401. Three TA levels are defined, for example, X-1, X, and X+1, to which the present invention is not limited. Therefore, TA levels can be defined in other ways. If a current TA level is set to be X,then the MS estimates its velocity in step 403. The MS may use Global Positioning System (GPS) information for the velocity estimation, or roughly calculate the velocity by counting the number of changes in the tracking area for a predetermined time period. In the present invention, the velocity of the MS covers the actual velocity estimated with the aid of the GPS and a change in the number of updates of the tracking area for a predetermined time period.

In step 405, the MS determines whether a TA update condition has been fulfilled. The TA update condition may be considered in two ways. One is periodic TA update, where the tracking area is updated a predetermined time after a previous TA update. The other is event-driven TA update. For instance, if a tracking area allocated to the MS is different from a tracking area indicated by tracking area information broadcast from a current cell, or if the MS moves too slow or too fast, the TA level needs to be changed and thus the TA update occurs.

In step 407, the MS compares the current velocity with a predetermined threshold S1. Herein, two thresholds S 1 and S2 are used for illustrative purposes. Hence, thresholds can be defined in other ways. If the current velocity is less than S1, the MS sends a TA update message with X-1, one level down from X to the BS in step 411.

If the current velocity is greater than or equal to S1, the MS compares the current velocity with another threshold S2 higher than S 1 in step 409. Because S 1 and S2 depend on TA levels, they are network-set during the MS's registration to the BS or they area default values. If the current velocity is less than S2, the MS sends a TA update message with the current TA level X to the BS in order to maintain the current TA level in step 413.

If the current velocity is greater than or equal to S2, the MS sends a TA update message with a TA level X+1, one level up from X to the BS in step 415. After sending the TA update message in step 411, 413 or 415, the MS receives a TA update confirm message from the BS in step 417 and updates the current TA level in step 419.

The TA level may be updated to the level set by the MS in step 411, 413 or 415, or to a level allocated by the BS in the TA update confirm message. While the TA update is performed in terms of TA level, the TA level may be replaced with other information that determines the size of a tracking area, such as a TA radius.

The MS operation described in FIG. 4 is also applicable to the second exemplary embodiment of the present invention illustrated in FIG 3 by replacing TA level by TA radius. Hence, a detailed description of the MS operation according to the second exemplary embodiment of the present invention will not be provided herein.

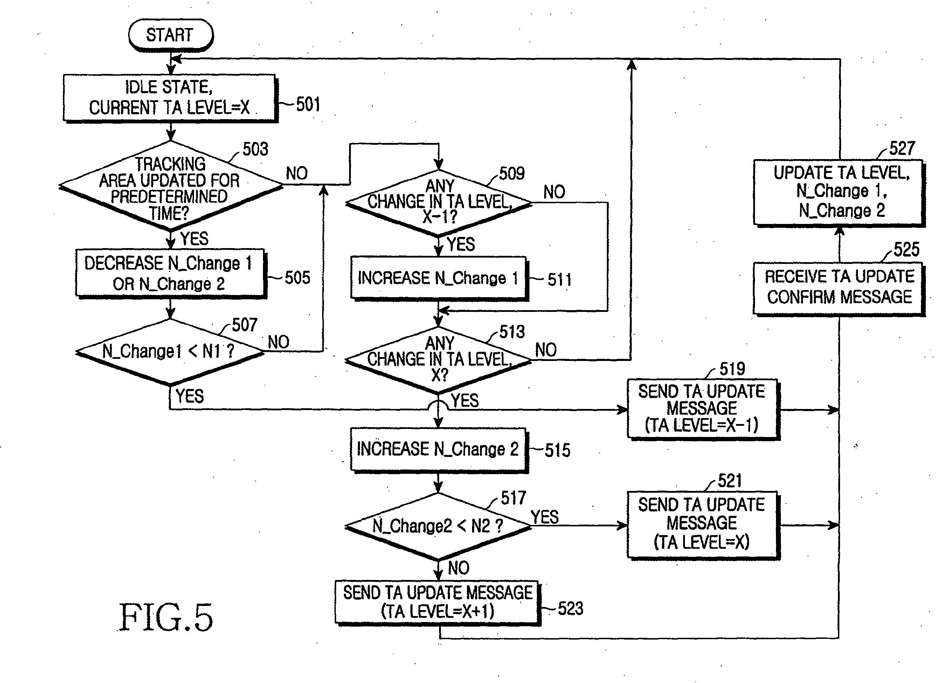

FIG. 5 is a flowchart illustrating an operation of the MS for estimating its velocity, i.e. step 403 of FIG. 4 during the MS operation according to the first exemplary embodiment of the present invention.

Variables used in the description of FIG 5 are defined as set forth in Table 1 below.

**TABLE 1**

| Variable | Description |
|---|---|
| T(X) | Timer value for TA level, X. Network-set during MS's registration to network, or default value. |
| N1, N2 | Update number threshold preset according to TA level. Network-set during MS's registration to network, or default values. |
| N_Change 1 | Number of updates of tracking area with TA level, X-1 during time interval (t-T(X-1), t). t is current time and X is current TA level. |
| N_Change 2 | Number of updates of tracking area with TA level, X during time interval (t-T(X), t). t is current time and X is current TA level. |

Referring to FIG. 5, the MS is in the idle mode in step 501. It is assumed that the three TA levels, X-1, X, and X+1 are defined, however, the TA levels can be defined in other ways. Let the current TA level be X. Then the MS determines whether a tracking area with a TA level, X or X-1 has been updated for a predetermined time period in step 503. The predetermined time period is a timer value T(X-1) or T(X) corresponding to the TA level, X-1 or X in Table 1. N_Change 1 denotes the number of TA updates at the TA level X-1 during T(X-1) and N_Change 2 denotes the number of TA updates at the TA level X during T(X). That is, the MS monitors a change in a tracking area with the one-level lower TA level, X-1 simultaneously with monitoring a change in the current TA level, X.

If the tracking area with X or X-1 has not been updated in step 503, the MS reduces one of N_Change 1 and N_Change 2 in step 505 because N_Change 1 and N_Change 2 indicate the counts of changes in the tracking areas from previous predetermined time instants to the current time instant. All of the N_Change 1 and the N_Change 2 in the step 505 can be reduced if the TA level, X-1 is not a minimum level. In step 507, the MS compares N_Change 1 with a predetermined update number threshold N1 for the TA level, X-1. Step 517 amounts to determining whether the MS has not moved much even in the tracking area with the TA level, X-1, one level down from the current TA level, X.

If N_Change 1 is less than N1, the MS requests the network to decrease the tracking area by sending a TA update message indicating X-1 in step 519. If N_Change 1 is greater than or equal toN1 in step 507 or if neither N_Change 1 nor N_Change 2 needs to be reduced in step 503, the MS proceeds to step 509.

In step 509, the MS determines whether the tracking area with the TA level, X-1 has been changed. If the tracking area with the TA level, X-1 has been changed, the MS increases N_Change 1 by 1 in step 511. At the same time, the MS stores the time when the change has occurred at the TA level X-1. In step 513, the MS determines whether the tracking area with the TA level, X has been changed. If the tracking area with the TA level, X has been changed, the MS increases N_Change 2 by 1 in step 515. As with step 511, the MS stores the time when the change has occurred at the TA level, X. If no change has occurred in step 513, the MS returns to step 501 to prepare for a TA update.

After increasing N_Change 2 in step 515, the MS compares N_Change 2 with a predetermined update number threshold N2 for the TA level, X in step 517. If N_Change 2 is less than N2, the MS sends a TA update message indicating the current TA level, X to the BS in step 521. On the contrary, if N_Change 2 is greater than or equal to N2, the MS sends a TA update message indicating a one-level higher TA level X+1 to the BS in step 523.

After step 519, 521 or 523, the MS receives a TA update confirm message from the BS in step 525 and updates the current TA level, N_Change 1, and N_Change 2 correspondingly in step 527. The current TA level may be updated to the TA level set in step 519, 521 or 523 or a TA level allocated by the BS in the TA update confirm message received in step 525. If the current level is kept in the TA update, N_Change 1 and N_Change 2 are also kept unchanged. If the updated TA level is one-level down, N_Change 2 is updated to the current N_Change 1 and N_Change 1 is set to an initial value 0. If the updated TA level is one-level up, N_Change 1 is updated to the current N_Change 2 and N_Change 2 is set to an initial value 0.

While not shown in FIG. 5, in case of periodic TA update, the MS determines whether the TA area with the TA level X has been changed in step 513. If no change has occurred to the tracking area with the TA level, X, the MS determines whether a TA update period has come, instead of returning to step 501. If the TA update period has come, the MS proceeds to step 521. If the TA update period has not yet come, the MS returns to step 501.

To prevent a phenomenon called "ping-pong" in which an MS at a boundary between two tracking areas moves frequently there between, a list of tracking areas in which the MS has been located from a predetermined past time to the current time. If a new tracking area is included in the list, it can be considered that there is no change in the tracking area of the MS.

The MS operation described in FIG. 5 is characterized in that the MS monitors the tracking area with the one-level lower TA level as well as the tracking area with the current TA level and if the tracking area with the one-level lower TA level is not changed, the MS can request update of the current tracking area to the one-level lower TA level. In this manner, the MS can set an appropriate tracking area according to its velocity by sensing a change in the tracking area without using GPS.

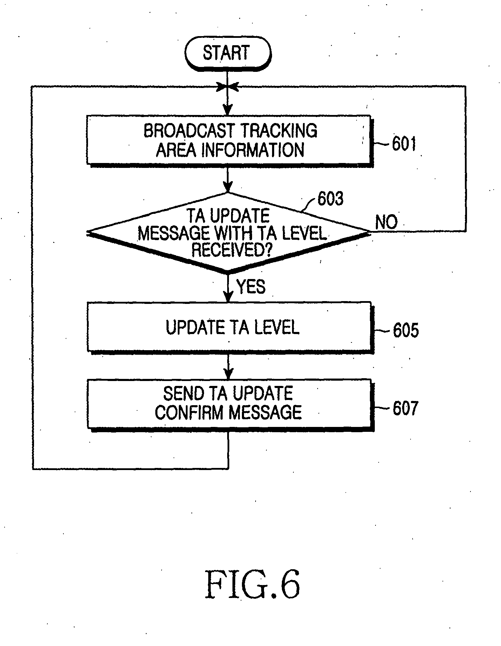

FIG. 6 is a flowchart illustrating an operation of the BS according to the first exemplary embodiment of the present invention.

Referring to FIG. 6, the BS broadcasts information about tracking areas including a cell managed by the BS in the cell and awaits reception of a TA update message from the MS in step 601. Upon receipt of a TA update message indicating a TA level, "a" in step 603, the BS updates the TA level of the MS to a TA level "b" in step 605. According to a policy of the BS, a=b or a≠b.

In step 607, the BS completes the TA update by sending a TA update confirm message to the MS. According to the policy, the BS may notify the MS of the TA level in the TA update confirm message and in the case where the TA level requested by the MS is set, the BS may not send the TA update confirm message.

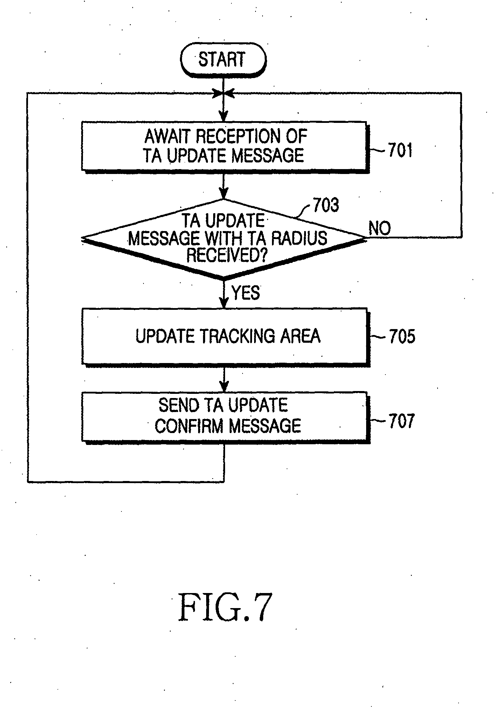

FIG. 7 is a flowchart illustrating an operation of the BS according to the second exemplary embodiment of the present invention.

Referring to FIG. 7, the BS awaits reception of a TA update message from the MS in step 701. Upon receipt of a TA update message indicating a TA radius, "a" in step 703, the BS sets the TA radius of the MS to "b" in step 705. According to the policy of the BS, a=b or a≠b.

In step 707, the BS completes the TA update by sending a TA update confirm message to the MS. According to the policy, the BS may notify the MS of the TA radius in the TA update confirm message and in the case where the TA radius requested by the MS is set, the BS may not send the TA update confirm message.

In accordance with the present invention as described above, a different TA can be set for an MS in idle mode according to its velocity in a wireless communication system.

A wide tracking area is allocated to a fast MS, thereby conserving battery power, while a narrow TA is allocated to a slow MS, thereby reducing paging overhead.

Since a change in a TA is detected without the aid of GPS, an appropriate TA is set for an MS according to its velocity.

Furthermore, if there is little change in a current TA, the level of the tracking area can be decreased.

While the invention has been shown and described with reference to certain exemplary embodiments of the present invention thereof, it will be understood by those skilled in the art that various changes in form and details may be made therein without departing from the spirit and scope of the present invention as defined by the appended claims and their equivalents.

## Claims

1. A method of a Mobile Station (MS) for setting a tracking area in a wireless communication system, comprising:
estimating the velocity of the MS;
comparing the estimated velocity of the MS with at least one velocity threshold of the MS; and
updating the level of a current tracking area according to the comparison.

2. The method of claim 1, wherein the updated tracking area level is one of different tracking area levels defined in a cell of a Base Station (BS).

3. The method of claim 2, wherein the tracking area levels are broadcast from the BS.

4. The method of claim 1, wherein the updated tracking area level is determined according to tracking area radius information sent from the MS to a BS.

5. The method of claim 4, wherein the updated tracking area level can be different from tracking area levels of other MSs.

6. The method of claim 4, further comprising:
receiving location information of the BS from the BS, before the updating; and
determining whether to update the tracking area if it is determined based on the location information that the MS is outside the radius of the current tracking area.

7. The method of claim 1, further comprising sending a tracking area update message including the updated tracking area level to a BS.

8. The method of claim 7, further comprising receiving a tracking area update confirm message from the BS.

9. The method of claim 1, wherein the velocity estimation comprises estimating the velocity by using Global Positioning System (GPS).

10. The method of claim 1, wherein the velocity estimation comprises estimating the velocity according to a change in the number of updates of the current tracking area for a predetermined time.

11. The method of claim 10, further comprising decreasing the level of the current tracking area, if the current tracking area is not updated for a predetermined time.

12. The method of claim 10, further comprising:
checking the number of updates in a tracking area with a level less than the level of the current tracking area; and
decreasing the level of the current tracking area if the number of updates is less than a predetermined threshold.

13. The method of claim 1, further comprising:
storing a list of tracking areas in which the MS has been located for a predetermined time; and
not updating the current tracking area if the list includes a tracking area to which the current tracking area is to be updated.

14. The method of claim 1, wherein the at least one velocity threshold is a stepwise value to be compared with the estimated velocity.

15. The method of claim 1, wherein information regarding the update of the tracking area is sent to a core network through a BS and to other BSs within a tracking area of the updated level through the core network.

16. The method of claim 1, further comprising determining whether a tracking area update condition has been fulfilled before the updating.

17. The method of claim 16, wherein the tracking area update condition comprises at least one of an update period and generation of a predetermined event.

18. The method of claim 1, wherein the MS is in an idle mode.

19. A method of a Base Station (BS) for setting a tracking area in a wireless communication system, comprising:
receiving a tracking area update message including an updated level from a Mobile Station (MS); and
sending a tracking area update confirm message to the MS,
wherein a level of a tracking area of the MS is updated to the updated level according to a change in a velocity of the MS.

20. The method of claim 19, further comprising broadcasting a plurality of available tracking area levels before receiving the tracking area update message, the plurality of different tracking area levels being defined in a cell of the BS.

21. The method of claim 19, further comprising broadcasting location information of the BS before receiving the tracking area update message, wherein the tracking area levels represent tracking area radiuses and the tracking area radiuses are determined according to the location information.

22. A wireless communication system comprising:
a Mobile Station (MS) for estimating a velocity of the MS, comparing the estimated velocity with at least one velocity threshold, and updating the level of a current tracking area according to the comparison; and
a Base Station (BS) for receiving a tracking area update message including the updated level from the MS.

23. The wireless communication system of claim 22, wherein a plurality of different tracking area levels are defined in a cell of the BS.

24. The wireless communication system of claim 23, wherein the BS broadcasts the tracking area levels.

25. The wireless communication system of claim 22, wherein the MS determines the updated level according to tracking area radius information and sends the tracking area update message including the tracking area radius information to the BS.

26. The wireless communication system of claim 25, wherein the updated tracking area level can be different from tracking area levels of other MSs.

27. The wireless communication system of claim 25, wherein the MS receives location information about the BS from the BS and determines whether to update the tracking area if it is determined based on the location information that the MS is outside the radius of the current tracking area.
